# EUROPÄISCHE PATENTSCHRIFT

(11) **EP 2 019 016 B1**
(45) Veröffentlichungstag und Bekanntmachung des Hinweises auf die Patenterteilung: **18.05.2011**
(21) Anmeldenummer: 08013310.1
(22) Anmeldetag: 24.07.2008
(51) Int. Cl.: B62B 9/00

(54) **Kinderwagen**
Pushchair
Poussette

(30) Priorität: 25.07.2007 DE 202007010454 U
(43) Veröffentlichungstag der Anmeldung: 28.01.2009
(73) Patentinhaber: Darmstädter, Jochen, 64625 Bensheim (DE)
(72) Erfinder: Darmstädter, Jochen, 64625 Bensheim (DE)
(74) Vertreter: Schmitt, Meinrad

(56) Entgegenhaltungen:
- DE-A1- 10 056 746
- DE-U1- 29 614 344
- FR-A1- 2 688 181
- US-A- 3 756 333
- US-A- 6 148 942

## Beschreibung

Die Erfindung bezieht sich auf einen Kinderwagen gemäß den im Oberbegriff des Patentanspruchs 1 angegebenen Merkmalen.

Aus der DE 296 14 344 U1 ist ein derartiger Kinderwagen mit einem Elektromotor bekannt, welcher eine Achse oder mindestens ein Rad antreibt. Der Elektromotor ist außerhalb der Achse angeordnet und über ein Abtriebsbauteil 3 verbunden, wobei ferner ein kuppelbares Bauteil zwischen dem Abtriebsbauteil des Motors und der Achse eingebaut ist.

Ferner ist aus der DE 203 11 123 U1 ein Kinderwagen bzw. Buggy mit einer als Elektromotor ausgebildeten Antriebseinheit bekannt. Der Kinderwagen enthält in bekannter Weise einen Rahmen und zwei Achsen mit Rädern und ferner einen Ablagekorb. Am Ablagekorb ist die komplette Antriebseinheit angebracht, wobei am Elektromotor und an einem Rad Zahnriemenscheiben vorgesehen sind, welche mittels eines Zahnriemens gekoppelt sind. Zur Energieversorgung ist ein Akkupaket vorgesehen, wobei zur Inbetriebnahme des Elektromotors ein an der Schiebestange des Kinderwagens angebrachter Hebel zur Betätigung und zum Schließen des Stromkreises angeordnet ist. Die Antriebseinheit ist ferner mit einem Freilauf versehen, damit beispielsweise bei Gefällstrecken der Elektromotor frei läuft.

Weiterhin ist aus der DE 100 56 746 A1 ein Kinderwagen bzw. Sportwagen bekannt, bei welchem in mindestens einem dessen Räder ein elektrisch angetriebener Motor integriert ist. Ferner ist der Kinderwagen mit einer analog wirkenden Bremseinrichtung ausgestattet, deren Bremskraft mittels eines Fluids übertragbar ist. Der Kinderwagen ist ferner mit diversen elektronischen Details, wie Beleuchtung oder Sicherheitseinrichtungen, ausgestattet, welche ebenso wie der Motor mit einer Energiequelle verbunden sind.

Hier ausgehend liegt der Erfindung die Aufgabe zugrunde, mit einem geringen konstruktiven Aufwand den Kinderwagen dahingehend weiterzubilden, dass bei kompakter und/oder gewichtssparender Bauweise eine optimierte Kraftübertragung vom Elektromotor auf das oder die Räder erreicht wird. Der Fertigungs- und/oder Montageaufwand soll reduziert werden und/oder die Handhabung beim Gebrauch soll vereinfacht werden.

Die Lösung dieser Aufgabe erfolgt gemäß den im Patentanspruch 1 angegebenen Merkmalen.

Der erfindungsgemäße Kinderwagen zeichnet sich durch eine einfache und funktionssichere Konstruktion aus, wobei der wenigstens eine Elektromotor in die Achse integriert ist und/oder in einem Hohlraum der Achse angeordnet ist. Des Weiteren ist zwischen dem Elektromotor und dem diesen zugeordneten bzw. von diesem antreibbaren Rad eine Einheit zur Kraft- oder Drehmomentübertragung, vorteilhaft gleichfalls in die Achse integriert. Diese Übertragungseinheit ermöglicht, insbesondere durch Form- und/oder Reibschluss, wahlweise die bevorzugt mechanische Kopplung oder Entkopplung von Elektromotor und Rad. Mittels dieser Einheit kann die Kraft- bzw. Drehmomentübertragung bei Bedarf herstellbar bzw. vorgegeben bzw. unterbrochen werden. Ferner sind in der Achse, welche bevorzugt als Rohr ausgebildet ist, und/oder im genannten Hohlraum Lagerungen des Rades und/oder des Elektromotors und/oder der Übertragungseinheit angeordnet, um erfindungsgemäß die jeweiligen Axial- und/oder Radialbewegungen zu ermöglichen. Die Kopplung bzw. Entkopplung wird mittels eines außerhalb der Achse angeordneten Bedienelements über ein insbesondere als Gelenkstange ausgebildetes Betätigungselement durchgeführt, welches in den Hohlraum der Achse derart eingreift, dass die erfindungsgemäße axiale Verschiebung der Räder oder der Übertragungseinheit oder des Elektromotors bedarfsweise durchgeführt wird.

Die im Inneren hohle Achse ist an ihren beiden Enden jeweils mit einem Achsdeckel verschlossen, und zwar bevorzugt mit einer lösbaren Verbindung, um zum Einen eine einfache Herstellung und Montage zu ermöglichen und um zum Anderen nach dem Lösen des Deckels Reparatur- oder Servicemaßnahmen an den im inneren Hohlraum angeordneten Komponenten durchführen zu können. Die Wellen der Ränder sind durch den jeweiligen Achsdeckel hindurch geführt, wobei die Räder in bekannter Weise mit ihren Wellen lösbar verbunden sind. Aufgrund der Integration der Lagerungen ebenso wie der Übertragungseinheiten einschließlich des oder der Elektromotoren ist die Achse sowie deren Verschluss mittels der beiden genannten Achsdeckel, sind jene in besonders vorteilhafter Weise vor äußeren Einwirkungen, insbesondere Verschmutzungen oder Feuchtigkeit, geschützt, wodurch eine lange Lebensdauer oder Gebrauchsdauer erreicht ist. Vorteilhaft ist darüber hinaus die Achse, insbesondere in Längsrichtung, geteilt ausgebildet und/oder mit wenigstens einer Öffnung versehen, weiche bevorzugt mittels eines Deckels verschließbar ist, um die Montage zu ermöglichen und/oder zu erleichtern und/oder Service- oder Reparaturmaßnahmen in einfacher Weise durchführen zu können.

Erfindungsgemäß sind zwei Elektromotoren und/oder zwei dem jeweiligen bezüglich der Achse drehbar angeordneten Rad zugeordnete Übertragungseinheiten in die Achse integriert bzw. in deren Hohlraum angeordnet. Das Rad und vorteilhaft beide Räder sind durch jeweilige Einzelradaufhängung und zugeordnete und innerhalb der Achse angeordnete Lager bezüglich der Achse beweglich angeordnet, und zwar in axialer Richtung, um die Kopplung oder Freigabe mittels der bevorzugt beiden Obertragungseinheiten zu realisieren. Aufgrund der erfindungsgemäßen Integration sind ein aufwändiges Getriebe oder Kraftübertragungsteile, wie Kette oder Riemen, nicht erforderlich. Das dem jeweiligen Elektromotor zugeordnete Rad ist in einfacher Weise vom Elektromotor zu entkoppeln, und in vorteilhafter Weise ist ein Freilauf zwischen Rad und Elektromotor entbehrlich. Da zwischen dem Rad und dem Elektromotor kein Freilauf vorhanden ist, kann der Elektromotor in beiden Drehrichtungen bzw. links oder rechts drehend geschaltet werden, wodurch in vorteilhafter Weise eine Vorwärts- oder Rückwärtsfahrt ermöglicht ist. Darüber hinaus kann der Kinderwagen im entkoppelten Zustand von Rad und Elektromotor auf herkömmliche Weise betrieben bzw. geschoben oder gezogen werden.

Weiterbildungen und besondere Ausgestaltungen der Erfindung sind in den Unteransprüchen sowie der nachfolgenden Beschreibung besonderer Ausführungsbeispiele angegeben.

Die Erfindung wird anhand der in der Zeichnung dargestellten Ausführungsbeispiele näher erläutert, ohne dass insoweit eine Beschränkung erfolgt. Es zeigen den Kinderwagen teilweise in schematischen Darstellungen:
- Fig. 1: die teilweise geschnittene Achse mit zwei integrierten Elektromotoren und extern angeordneter Batterie,
- Fig. 2: vergrößert den linken Teil der Achse gemäß Fig. 1,
- Fig. 3: ein weiteres Ausführungsbeispiel, ähnlich dem gemäß Fig. 1, jedoch mit der gleichfalls in die Achse integrierten Batterie.

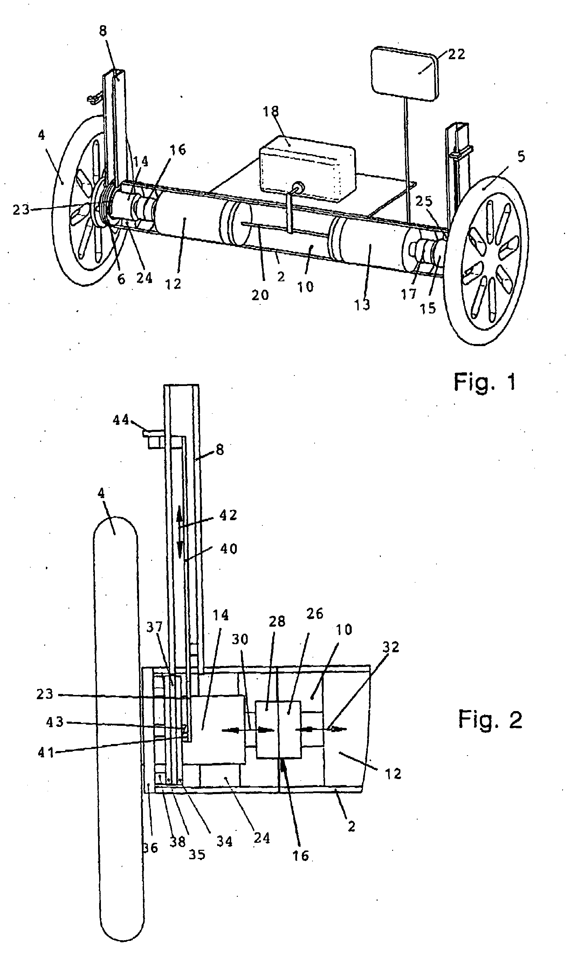

Gemäß Fig. 1 enthält der Kinderwagen eine Achse 2, an deren beiden Enden jeweils ein Rad 4, 5 mittels einer Lagerung 6 drehbar gelagert ist. Die Achse 2 ist mit einem teilweise dargestellten Rahmen 8 des Kinderwagens verbunden, welcher im übrigen in bekannter Weise ausgebildet ist. Es sei festgehalten, dass der Kinderwagen beispielsweise einen Sitz- oder Liegeeinsatz oder Ablagekorb enthalten kann, oder als Sportwagen oder Buggy ausgebildet sein kann. Die Achse 2 enthält einen inneren Hohlraum 10 und/oder ist als Rohr ausgebildet und ist bevorzugt an ihren beiden Enden mit Teilen des Rahmens 8 fest verbunden und somit integraler Bestandteil des Rahmens 8. Im Hohlraum 10 ist wenigstens ein Elektromotor 12 als Antrieb des oder der Räder 4, 5 angeordnet und somit in die Achse 2 integriert. Wie ersichtlich, ist zwischen dem Rad 4 bzw. dessen Welle 14 eine Übertragungseinheit 16 zur Kraft- bzw. Drehmomentübertragung vorgesehen, welche erfindungsgemäß gleichfalls im Hohlraum 10 angeordnet und somit in die Achse 2 integriert ist. Grundsätzlich genügt im Rahmen der Erfindung die Integration eines Elektromotors in die Achse 2 zum Antrieb beider Räder 4, 5, welche jeweils mit einer Übertragungseinheit 16 mit dem Elektromotor 12 gekoppelt sind und bei Bedarf in bevorzugter Weise mechanisch vom Elektromotor entkoppelbar sind.

In bevorzugter Weise ist jedoch für jedes Rad 4, 5, wie dargestellt, jeweils ein separater Elektromotor 12, 13 vorgesehen, wobei zwischen den Wellen 14 bzw. 15 der Räder 4 bzw. 5 jeweils eine Übertragungseinheit 16, 17 angeordnet ist. Die Integration von zwei Elektromotoren 12, 13 ist besonders vorteilhaft, da diese vergleichsweise geringe Außenabmessungen bzw. Durchmesser aufweisen und somit auch die Achse 2 ein geringes Bauvolumen und/oder geringe Abmessungen und/oder Durchmesser und/oder ein geringes Gewicht aufweist. Zur Energieversorgung des oder der Elektromotoren 12, 13 ist außerhalb der Achse 2 eine externe Batterie 18 vorgesehen, welche in geeigneter Weise mit der Achse 2 und/oder dem Rahmen 8 verbunden ist und über elektrische Leitungen 20 an den oder die Elektromotoren 12, 13 angeschlossen ist. Ferner ist eine Steuereinheit und/oder ein elektronisches Bedienpult 22 vorgesehen, welches insbesondere an einer hier nicht dargestellten Lenkstange des Kinderwagens befestigt ist und zur Steuerung, wie insbesondere Vorgabe der Drehzahl und/oder Drehrichtung der Elektromotoren 12, 13 dient. Ferner ist zum Koppeln bzw. Entkoppeln eine Betätigungseinrichtung vorgesehen, welche u. a. einen mit der axialen Lagerung 6 zusammen wirkenden Bügel 23 aufweist. Im Hohlraum 10 befindet sich ferner eine Lagerbuchse 24 bzw. 25 für die Axial- und Radialbewegung der Welle 14 bzw. 15.

Fig. 2 zeigt vergrößert den linken Teil der Achse 2 mit dem Rad 4 und dem Rahmenteil 8 sowie teilweise den in den Hohlraum 10 der Achse 2 integrierten Elektromotor 12. Die Übertragungseinheit 16 enthält ein Übertragungsteil 26 des Motors 12 sowie ein dem Rad 4 zugeordnetes Übertragungsteil 28. Wie mit den Doppelpfeilen 30, 32 angedeutet, kann durch Axialbewegung des oder der Übertragungsteile 26,28 und/oder des Rades 4 und/oder des Elektromotors 12 die Kopplung oder die Entkopplung des Rades 4 bezüglich des Elektromotors 12 erfolgen. Weiterhin sind im Hohlraum 10 der Achse 2 für das Rad 4 und/oder deren Welle 14 insbesondere Axiallagerscheiben 34, 35 der bereits erwähnten axialen Lagerung angeordnet. Die Achse 2 ist an ihrem Ende mittels eines Achsdeckels 36 abgeschlossen, durch welchen die Welle 14 hindurch geführt ist und welcher in bevorzugter Weise mit der Achse 2 lösbar verbunden ist, beispielsweise mittels einer Gewindeverbindung. Des Weiteren sind im Achsdeckel 36 und/oder zwischen diesem und dem Axiallager mit zwei Scheiben 34, 35 wenigstens eine, zweckmäßig mehrere, Druckfedern 38 angeordnet, um im Kopptungszustand eine gleichbleibende Kraft- bzw. Drehmomentübertragung sicher zu stellen. In bevorzugter Weise ist zwischen den Scheiben 34, 35 eine mit der Radwelle 14 verbundene Druckscheibe 37 angeordnet.

Zur Entkopplung der Übertragungseinheit 16 und/oder des Rades 4 vom Elektromotor 12 ist in bevorzugter Weise eine Gelenkstange 40 vorgesehen, welche am unteren Ende den genannten Bügel 23 aufweist. Der Bügel 23 weist eine Nocke 41 auf und ist in Richtung des Doppelpfeils 42 bewegbar und/oder mit einem mechanischen Bedienelement 44 bewegbar oder betätigbar, Die Gelenkstange 40 ist vorteilhaft zumindest teilweise in den Rahmen 8 integriert und/oder in diesem bewegbar angeordnet ist. Die Nocke 41 steht in Wirkeingriff mit einer Schrägfläche 43 der Scheibe 34 der axialen Lagerung. Mittels der derart ausgebildeten Betätigungseinrichtung kann die in der Lagerbuchse 24 axial bewegbar angeordnete Welle 14 in Kombination mit der Druckfeder axial verschoben werden, wobei das mit der Welle 14 verbundene Übertragungsteil 28 ebenfalls in Längsrichtung der Achse 2 axial verschoben wird, um die Kopplung mit dem anderen Übertragungsteil 26 zu unterbrechen bzw. herzustellen. Es versteht sich, dass die vorstehenden Ausführungen zum gemäß Zeichnung linken Rad 4 und der zugeordneten Komponenten analog auch für das rechte Rad gemäß Fig. 1 gelten.

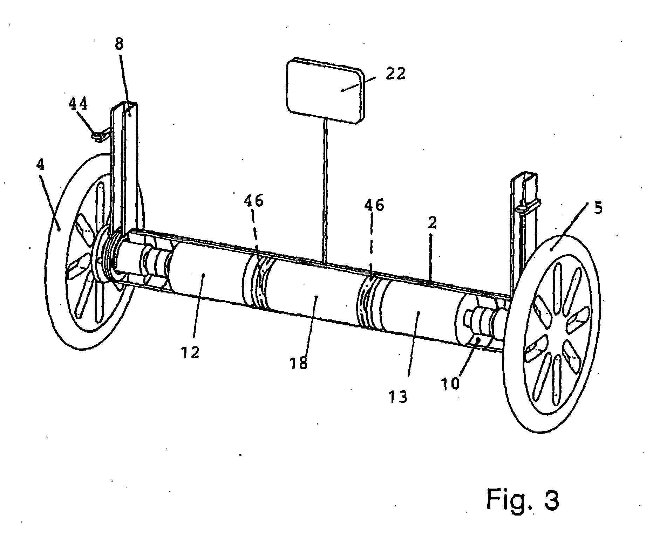

Fig. 3 zeigt ein weiteres Ausführungsbeispiel, welches grundsätzlich mit dem vorbeschriebenen Ausführungsbeispiel übereinstimmt, wobei jedoch die Batterie 18 gleichfalls in die Achse 2 bzw. deren Hohlraum 10 ebenso wie die Elektromotoren 12,13 integriert ist. Wie mit strichpunktierten Linien 46 angedeutet, weist die Achse 2 eine mittels eines Deckels verschließbare bzw. frei gebbare Öffnung auf, und aufgrund dieser besonderes zweckmäßigen Deckelkonstruktion kann die Batterie 18 in einfacher Weise in die Achse 2 eingesetzt bzw. aus dieser entnommen werden. Darüber hinaus kann die Achse 2 weitere Öffnungen und Deckel aufweisen, so dass die in die Achse integrierten Komponenten, wie insbesondere die Elektromotoren 12, 13 und/oder die Lagerung 6 und/oder die Übertragungseinheit 16, problemlos zugänglich sind.

### Bezugszeichen

- 2: Achse / Rohr
- 4, 5: Rad
- 6: Lagerung
- 8: Rahmen
- 10: Hohlraum in 2
- 12, 13: Elektromotor
- 14, 15: Welle von 4, 5
- 16, 17: Übertragungseinheit
- 18: Batterie
- 20: elektrische Leitung
- 22: Steuereinheit / elektronisches Bedienpult
- 23: Bügel
- 24,25: Lagerbuchse
- 26,28: Übertragungsteil von 16
- 30, 32: Doppelpfeil
- 34, 35: Axiallager / Scheibe
- 36: Achsdeckel
- 37: Druckscheibe
- 38: Druckfeder
- 40: Betätigungselement / Gelenkstange
- 41: Nocke an 23
- 42: Doppelpfeil
- 43: Schrägfläche von 34
- 44: Bedienelement
- 46: strichpunktierte Linie / Deckel

## Patentansprüche

1. Kinderwagen, enthaltend einen Rahmen (8) und wenigstens eine mit diesem verbundene Achse (2), an welcher mittels eines Elektromotors (12, 13) antreibbare Räder (4, 5) drehbar gelagert sind,
**dadurch gekennzeichnet, dass** der wenigstens eine Elektromotor (12, 13) in die Achse (2) integriert ist und in einen Hohlraum (10) derselben angeordnet ist, und dass im Hohlraum (10) der Achse (2) zwischen dem Motor (12, 13) und dem zugeordneten Rad (4, 5) eine Übertragungseinheit (16, 17) derart angeordnet ist, dass die Kraft- bzw. Drehmomentübertragung wahlweise koppelbar oder entkoppelbar ist, wobei die Räder (4, 5) oder wenigstens ein Übertragungsteil (26, 28) der Übertragungseinheit (16, 17) oder der Elektromotor (12, 13) in Längsrichtung der Achse (2) verschiebbar angeordnet sind.

2. Kinderwagen nach Anspruch 1, **dadurch gekennzeichnet, dass** zwei Elektromotoren (12, 13) in die Achse (2) integriert und in deren Hohlraum (10) angeordnet sind und/oder dass die zwischen dem jeweiligen Elektromotor (12, 13) und dem zugeordneten Rad (4, 5) angeordneten beiden Übertragungseinheiten (16, 17) gleichfalls in die Achse (2) integriert und im Hohlraum (10) derselben angeordnet sind.

3. Kinderwagen nach Anspruch 1 oder 2, **dadurch gekennzeichnet, dass** die insbesondere durch Form- und/oder Reibschluss koppelbare und/oder gekoppelten Übertragungsteile (26, 28) der Übertragungseinheit (16, 17) mit dem Elektromotor (12) bzw. dem Rad (4) und/oder der Radwelle (14) verbunden sind.

4. Kinderwagen nach einem der Ansprüche 1 bis 3, **dadurch gekennzeichnet, dass** für das jeweilige Rad (4, 5) eine in axialer Richtung bewegbar ausgebildete Einzelradaufhängung (14, 24) vorgesehen ist und/oder dass in der Achse (2) eine Lagerbuchse (24, 25) angeordnet ist, in welcher eine Radwelle (14, 15) axial verschiebbar gelagert ist.

5. Kinderwagen nach einem der Ansprüche 1 bis 4, **dadurch gekennzeichnet, dass** die Achse (2), insbesondere im Hohlraum (10), eine Lagerbuchse (24) und/oder Axiallager (34, 35) für die Axialbewegung und/oder Radialbewegung enthält.

6. Kinderwagen nach einem der Ansprüche 1 bis 5, **dadurch gekennzeichnet, dass** die Batterie (18) extern außerhalb der Achse (2) oder in der Achse (2) bzw. deren Hohlraum (10) integriert angeordnet ist.

7. Kinderwagen nach einem der Ansprüche 1 bis 6, **dadurch gekennzeichnet, dass** die Achse (2) wenigstens eine bevorzugt mittels eines Deckels (46) verschließbare bzw. frei gebbare Öffnung (46) enthält und/oder dass die Achse (2), insbesondere in Längsrichtung, zumindest teilweise unterteilt ausgebildet ist.

8. Kinderwagen nach einem der Ansprüche 1 bis 7, **dadurch gekennzeichnet, dass** eine Betätigungseinrichtung (40 - 44) vorgesehen ist, mittels welcher die axiale Verschiebung durchführbar ist.

9. Kinderwagen nach einem der Ansprüche 1 bis 8, **dadurch gekennzeichnet, dass** die Radwelle (14, 15) auf einer axialen Lagerung (6) abgefangen ist.

10. Kinderwagen nach einem der Ansprüche 1 bis 9, **dadurch gekennzeichnet, dass** die Lagerung (6) und die Lagerbuchse (24) und/oder die Radwelle (14, 15) zusammen mit dem wenigstens einen Elektromotor (12, 13) im Hohlraum (10) der Achse (2) angeordnet sind und/oder dass an den beiden Enden der Achse (2) jeweils ein Achsdeckel (36) angeordnet ist, mit welchen der Hohlraum (10) nach außen abgeschlossen ist, wobei die Radwellen (14, 15) durch den jeweiligen Achsdeckel (36) hindurch geführt sind.

11. Kinderwagen nach einem der Ansprüche 1 bis 10, **dadurch gekennzeichnet, dass** die Batterie (18) im Hohlraum (10) der Achse (2), insbesondere axial zwischen den beiden Elektromotoren (12, 13) angeordnet ist, und dass die Achse (2) im Bereich der Batterie ° (18) eine mittels eines Deckels verschließbare bzw. frei gebbare Öffnung aufweist.

12. Kinderwagen nach einem der Ansprüche 1 bis 11, **dadurch gekennzeichnet, dass** die Achse (2), insbesondere in Längsrichtung, geteilt ausgebildet ist und/oder eine oder mehrere Öffnungen enthält, welche mittels zugeordnetem Deckel verschließbar bzw. frei gebbar sind.

## Claims

1. A pushchair, including a frame (8) and at least one axle (2) connected thereto, on which wheels (4, 5), which can be driven by means of an electric motor (12, 13), are supported so as to be capable of being rotated,
**characterized in that** the at least one electric motor (12, 13) is integrated into the axle (2) and is arranged in a cavity (10) thereof, and that a transfer unit (16, 17) is arranged in the cavity (10) of the axle (2) between the motor (12, 13) and the assigned wheel (4, 5) such that the power or torque transmission, respectively, can either be coupled or uncoupled, wherein the wheels (4, 5) or at least one transfer part (26, 28) of the transfer unit (16, 17) or the electric motor (12, 13) are arranged so as to be displaceable in longitudinal direction of the axle (2).

2. The pushchair according to claim 1, **characterized in that** two electric motors (12, 13) are integrated into the axle (2) and are arranged in the cavity (10) thereof and/or that the two transfer units (16, 17), which are arranged between the respective electric motor (12, 13) and the assigned wheel (4, 5), are also integrated into the axle (2) and are arranged in the cavity (10) thereof.

3. The pushchair according to claim 1 or 2, **characterized in that** the transfer parts (26, 28) of the transfer unit (16, 17), which can in particular be coupled and/or which are coupled by means of form closure and/or frictional connection, are connected to the electric motor (12) or the wheel (4), respectively, and/or the wheel shaft (14).

4. The pushchair according to one of claims 1 to 3, **characterized in that** provision is made for an independent wheel suspension (14, 24), which is embodied so as to be capable of being moved in axial direction for the respective wheel (4, 5) and/or that a bearing bushing (24, 25), in which a wheel shaft (14, 15) is supported so as to be capable of being axially displaced, is arranged in the axle (2).

5. The pushchair according to one of claims 1 to 4, **characterized in that** the axle (2) includes a bearing bushing (24) and/or axial bearing (34, 35) for the axial movement and/or radial movement, in particular in the cavity (10).

6. The pushchair according to one of claims 1 to 5, **characterized in that** the battery (18) is arranged externally outside of the axle (2) or so as to be integrated in the axle (2) or in the cavity (10) thereof, respectively.

7. The pushchair according to one of claims 1 to 6, **characterized in that** the axle (2) includes at least one opening (46), which can preferably be closed or released, respectively, by means of a cover (46) and/or that the axle (2) is embodied so as to be at least partially subdivided, in particular in longitudinal direction.

8. The pushchair according to one of claims 1 to 7, **characterized in that** provision is made for an actuating device (40-44), by means of which the axial displacement can be carried out.

9. The pushchair according to one of claims 1 to 8, **characterized in that** the wheel shaft (14, 15) is caught on an axial bearing (6).

10. The pushchair according to one of claims 1 to 9, **characterized in that** the bearing (6) and the bearing bushing (24) and/or the wheel shaft (14, 15) together with the at least one electric motor (12, 13) are arranged in the cavity (10) of the axle (2) and/or that an axle cover (36) is arranged in each case at both ends of the axle (2), by means of which axle cover the cavity (10) is closed towards the outside, wherein the wheel shafts (14, 15) are guided through the respective axle cover (36).

11. The pushchair according to one of claims 1 to 10, **characterized in that** the battery (18) is arranged in the cavity (10) of the axle (2), in particular axially between the two electric motors (12, 13) and that the axle (2) encompasses an opening in the area of the battery (18), which can be closed or released, respectively, by means of a cover.

12. The pushchair according to one of claims 1 to 11, **characterized in that** the axle (2) is embodied so as to be divided, in particular in longitudinal direction, and/or includes one or a plurality of openings, which can be closed or released, respectively, by means of an assigned cover.

## Revendications

1. Poussette, contenant un châssis (8) et au moins un axe (2) relié à celui-ci, sur lequel des roues (4, 5) pouvant être entraînées au moyen d'un moteur électrique (12, 13) sont positionnées rotativement,
**caractérisée en ce que** le au moins un moteur électrique (12, 13) est intégré dans l'axe (2) et est disposé dans un espace creux (10) de celui-ci, et **en ce que** dans l'espace creux (10) de l'axe (2) ente le moteur (12, 13) et la roue coordonnée (4, 5) une unité de transmission (16, 17) est disposée de telle sorte que la transmission de force, resp. de couple de rotation puisse être couplée ou découplée au choix, dans laquelle les roues (4, 5) ou au moins une partie de transmission (26, 28) de l'unité de transmission (16, 17) ou du moteur électrique (12, 13) sont disposées de manière déplaçable dans la direction longitudinale de l'axe (2).

2. Poussette selon la revendication 1, **caractérisée en ce que** deux moteurs électriques (12, 13) sont intégrés dans l'axe (2) et sont disposés dans l'espace creux (10) de celui-ci et/ou **en ce que** les deux unités de transmission (16, 17) disposées entre le moteur électrique respectif (12, 13) et la roue coordonnée (4, 5) sont pareillement intégrés dans l'axe (2) et sont disposés dans l'espace creux (10) de celui-ci.

3. Poussette selon la revendication 1 ou 2, **caractérisée en ce que** les parties de transmission (26, 28) couplées et/ou pouvant être couplées notamment par conjonction de forme et/ou de friction de l'unité de transmission (16, 17) sont reliées au moteur électrique (12), resp. à la roue (4) et/ou à l'arbre de roue (14).

4. Poussette selon une des revendications 1 à 3, **caractérisée en ce que** pour la roue respective (4, 5) une suspension de roue individuelle (14, 24) réalisée de manière mobile dans la direction axiale est prévue et/ou **en ce que** un coussinet de palier (24, 25) est disposé dans l'axe (2), dans lequel un arbre de roue (14, 15) est positionné de manière déplaçable axialement.

5. Poussette selon une des revendications 1 à 4, **caractérisée en ce que** l'axe (2), notamment dans l'espace creux (10), contient un coussinet de palier (24) et/ou un palier axial (34, 35) pour le mouvement axial et/ou le mouvement radial.

6. Poussette selon une des revendications 1 à 5, **caractérisée en ce que** la batterie (18) est disposée en externe à l'extérieur de l'axe (2) ou intégrée dans l'axe (2), resp. dans son espace creux (10).

7. Poussette selon une des revendications 1 à 6, **caractérisée en ce que** l'axe (2) contient au moins une ouverture (46) pouvant être fermée, respectivement découverte de préférence au moyen d'un couvercle (46) et/ou **en ce que** l'axe (2) est réalisé de manière au moins partiellement divisée, notamment dans la direction longitudinale.

8. Poussette selon une des revendications 1 à 7, **caractérisée en ce que** un dispositif d'actionnement (40-44) est prévu, au moyen duquel le déplacement axial peut être effectué.

9. Poussette selon une des revendications 1 à 8, **caractérisée en ce que** l'arbre de roue (14, 15) est amorti sur un palier axial (6).

10. Poussette selon une des revendications 1 à 9, **caractérisée en ce que** la palier (6) et le coussinet de palier (24) et/ou l'arbre de roue (14, 15) sont disposés conjointement à au moins un moteur électrique (12, 13) dans l'espace creux (10) de l'axe (2) et/ou en ce que aux deux extrémités de l'axe (2) un couvercle d'axe (36) est respectivement disposé, avec lequel l'espace creux (10) est isolé vers l'extérieur, dans laquelle les arbres de roue (14, 15) sont guidés à travers le couvercle d'axe (36) respectif.

11. Poussette selon une des revendications 1 à 10, **caractérisé en ce que** la batterie (18) est disposée dans l'espace creux (10) de l'axe (2), notamment axialement entre les deux moteurs électriques (12, 13), et **en ce que** l'axe (2) présente au niveau de la batterie (18) une ouverture pouvant être fermée, resp. découverte au moyen d'un couvercle.

12. Poussette selon une des revendications 1 à 11, **caractérisée en ce que** l'axe (2) est réalisé en étant divisé, notamment dans la direction longitudinale, et/ou contint une ou plusieurs ouvertures, qui peuvent être fermées, resp. découvertes au moyen d'un couvercle coordonné.
